(19) Europäisches Patentamt / European Patent Office / Office européen des brevets

(11) **EP 1 439 974 B1**

(12) **FASCICULE DE BREVET EUROPEEN**

(45) Date de publication et mention
de la délivrance du brevet:
**09.01.2008 Bulletin 2008/02**

(21) Numéro de dépôt: **02785297.9**

(22) Date de dépôt: **22.10.2002**

(51) Int Cl.:
***B60K 15/03*** *(2006.01)*

(86) Numéro de dépôt international:
**PCT/EP2002/011904**

(87) Numéro de publication internationale:
**WO 2003/035423 (01.05.2003 Gazette 2003/18)**

(54) **SYSTEME ET PROCEDE D'OBTURATION D'UNE OUVERTURE D'UN RESERVOIR**

VORRICHTUNG UND VERFAHREN ZUM VERSCHLIESSEN EINER TANKÖFFNUNG

SYSTEM AND METHOD FOR SEALING A TANK OPENING

(84) Etats contractants désignés:
**AT BE BG CH CY CZ DE DK EE ES FI FR GB GR IE IT LI LU MC NL PT SE SK TR**

(30) Priorité: **24.10.2001 FR 0113931**

(43) Date de publication de la demande:
**28.07.2004 Bulletin 2004/31**

(73) Titulaire: **Inergy Automotive Systems Research (SA)**
**1120 Bruxelles (BE)**

(72) Inventeurs:
• **GERARD, Yannick**
**B-1950 Kraainem (BE)**
• **LEONARD, Stéphane**
**B-1070 Bruxelles (BE)**
• **DOUGNIER, François**
**B-3190 Boortmeerbeek (BE)**

(74) Mandataire: **Jacques, Philippe et al**
**Solvay S.A.**
**Département de la Propriété Industrielle,**
**Rue de Ransbeek, 310**
**1120 Bruxelles (BE)**

(56) Documents cités:
**EP-A- 0 941 884          WO-A-01/21428**

EP 1 439 974 B1

**Description**

La présente invention concerne un réservoir comprenant un système d'obturation d'une ouverture du réservoir.

Les réservoirs à liquides et à gaz en usage dans l'industrie ou embarqués dans les véhicules de nature diverse doivent généralement satisfaire à des normes d'étanchéité et de perméabilité en rapport avec le type d'usage pour lequel ils sont conçus et les exigences en matière d'environnement qu'ils doivent respecter. On assiste actuellement, tant en Europe que dans le monde à un renforcement considérable des exigences concernant la limitation des émissions de polluants dans l'atmosphère et la nature en général. La conception de réservoirs à liquides et à gaz évolue en conséquence rapidement vers des techniques capables de mieux garantir l'étanchéité et la sécurité sous-des conditions variées d'utilisation. Par ailleurs, on s'est aussi efforcé de réduire au maximum les pertes ayant pour origine les canalisations et accessoires divers liés aux réservoirs. Un moyen parfois utilisé a été d'incorporer certains accessoires et canalisations à l'intérieur des réservoirs, éliminant ainsi leur interface avec l'atmosphère extérieure.

Il est connu par la demande de brevet WO 01/21428 de SOLVAY d'obturer une ouverture d'un réservoir à carburant multicouche par une plaque en matière plastique multicouche soudée sur la paroi du réservoir afin de recouvrir l'ouverture, la couche de matière plastique de la plaque soudée sur le réservoir ayant une composition compatible avec la couche superficielle du réservoir.

Dans les réservoirs décrits dans cette demande de brevet, il subsiste cependant un canal de perméation de carburant situé entre la couche barrière que l'on trouve généralement à l'intérieur de la structure multicouche des plaques d'obturation et la paroi du réservoir, le canal étant constitué de matière plastique telle que le PEHD dont l'imperméabilité aux carburants n'est pas optimale.

La présente invention a pour but de fournir un système d'obturation d'un réservoir qui diminue encore plus les pertes de liquide et de gaz par rapport aux systèmes d'obturation connus et permette d'atteindre des niveaux de pertes suffisamment faibles que pour satisfaire aux nouvelles normes environnementales dont l'entrée en vigueur est programmée dans un avenir prochain aussi bien en Europe qu'aux Etats-Unis.

A cet effet l'invention concerne un réservoir en matière plastique comprenant un système d'obturation constitué d'une plaque en matière plastique soudée sur la paroi du réservoir à l'endroit du pourtour d'une ouverture dans le réservoir, la plaque étant constituée d'une structure multicouche comprenant une couche barrière interne et une couche externe soudée sur le réservoir ayant une composition compatible avec celle de la matière plastique constituant la surface externe du réservoir, selon lequel une zone périphérique de la plaque, dans la zone de soudure, a été effilée de manière à adapter sa géométrie selon la relation suivante :

$$l/e \geq 5$$

dans laquelle *l* représente la largeur de la zone effilée et e l'épaisseur de la couche en contact avec la paroi du réservoir dans la zone effilée, exprimées dans les mêmes unités de longueur.

De préférence le rapport *l/e* est au moins égal à 8.

Par réservoir, on entend une enceinte fermée, de formes diverses, généralement étanche vis-à-vis de l'extérieur, qui peut être équipée de divers accessoires internes ou traversant la paroi de l'enceinte. Le réservoir peut être un réservoir à gaz, un réservoir à liquide ou un réservoir destiné à contenir à la fois un gaz et un liquide. De préférence, il est un réservoir à liquide ou un réservoir à liquide contenant aussi une phase gazeuse.

Certains réservoirs présentent une ou plusieurs ouvertures, c'est-à-dire une découpe de forme circulaire ou non, pratiquée à travers la paroi du réservoir pour des motifs divers, par exemple, afin de pouvoir introduire dans le réservoir un ou plusieurs accessoires qu'il n'est pas possible d'y incorporer lors de sa fabrication.

Avant de pouvoir utiliser le réservoir pour son usage habituel d'entreposage et de confinement de liquide et de gaz, il est donc nécessaire de concevoir et d'adapter un système d'obturation capable de fermer le plus hermétiquement possible le réservoir, après l'introduction de l'accessoire.

Selon l'invention, le système d'obturation est conçu pour des réservoirs en matière plastique. Par matière plastique, on entend toute matière polymérique de synthèse, thermoplastique ou thermodurcissable se présentant à l'état solide dans les conditions ambiantes, ainsi que les mélanges d'au moins deux de ces matières. Les polymères visés comprennent aussi bien les homopolymères que les copolymères (binaires ou ternaires notamment). Des exemples de tels copolymères sont, de manière non limitative : les copolymères à distribution aléatoire (copolymères "statistiques"), les copolymères séquencés, les copolymères à blocs et les copolymères greffés. Les polymères thermoplastiques, y compris les élastomères thermoplastiques sont préférés.

Les réservoirs en matière plastique selon l'invention se présentent de préférence sous la forme de réservoirs de structure multicouche. Les réservoirs comprenant au moins une couche de polyéthylène haute densité (PEHD) sont particulièrement préférés. Des réservoirs particulièrement préférés sont ceux dont la structure comprend en outre au moins une couche interne en matériau barrière, c'est-à-dire un matériau, généralement de nature polymérique qui possède une très grande imperméabilité à certains liquides et gaz.

On peut, par exemple, faire usage de compositions barrière connues, telles que celles utilisées pour imperméabiliser les réservoirs à carburant. Des exemples de telles compositions barrière sont, de manière non limitative : les résines à base de polyamides ou copolyamides, les copolymères statistiques d'éthylène et d'alcool vinylique (EVOH), ou encore les polymères à cristaux liquides (LCP) thermotropiques tels que les copolyesters de l'acide p-hydroxybenzoïque et, soit de l'acide 6-hydroxy-2-naphtoïque, soit dé l'acide téréphtalique et du 4,4'-biphénol (par exemple les copolyesters commercialisés sous les marques VECTRA® et XYDAR®).

Par le vocable "plaque", on entend désigner tout élément plein d'épaisseur faible par rapport à sa surface et dont la rigidité est voisine de celle des parois du réservoir. Selon l'invention, la matière constituant la plaque comprend une matière plastique. De préférence la plaque faisant partie du système d'obturation conforme à l'invention est réalisée exclusivement en matière plastique. La plaque peut présenter des formes diverses ; le plus souvent, la forme de la plaque dépend des divers types de réservoir et de l'emplacement de l'ouverture à obturer sur la surface de ces réservoirs. La plaque présente souvent une surface plane ou légèrement incurvée, en particulier dans le cas d'une ouverture de petites dimensions telles que, par exemple, les ouvertures circulaires de diamètre n'excédant pas 80 mm.

La plaque est selon l'invention, soudée sur la paroi du réservoir à l'endroit du pourtour de l'ouverture. On entend par là que la plaque est solidarisée avec cette paroi par mise en contact et interpénétration partielle des molécules d'une portion de la surface d'une des deux faces principales de la plaque jouxtant les extrémités de celle-ci et formant une surface de jonction en forme d'anneau fermé, circulaire ou de forme quelconque et épousant plus ou moins fidèlement le périmètre extérieur de cette face de la plaque avec les molécules d'une surface similaire du réservoir, située en bordure de l'ouverture, sur la totalité de son pourtour.

Selon l'invention, la plaque est constituée d'une structure multicouche dont la couche externe soudée sur le réservoir a une composition compatible avec celle de la matière plastique constituant la surface externe du réservoir.

Par compatibilité, on entend ici une compatibilité chimique et physique des constituants des compositions respectives de la couche de la plaque soudée sur le réservoir et de la paroi externe de celui-ci au voisinage de l'ouverture. Une bonne compatibilité évite les phénomènes de ségrégation de certains des constituants des compositions respectives des parties soudées, de même que toute réaction chimique et phénomène physique préjudiciables aux propriétés du réservoir dont l'ouverture est ainsi obturée. Une bonne compatibilité garantit en général l'adhésion à long terme de la plaque sur le réservoir.

Un réservoir particulier préféré conforme à l'invention est celui où le réservoir comprend, comme la plaque, une couche barrière imperméable aux liquides et aux gaz. Les couches barrière de la plaque et du réservoir peuvent être identiques ou différentes. On préfère généralement que ces couches barrières soient identiques, en particulier qu'elles comprennent des compositions barrière identiques.

On peut incorporer ces compositions barrière à l'une des couches de la plaque ou insérer à l'intérieur de la structure une couche supplémentaire particulière constituée essentiellement de composition barrière. De préférence, on insère à l'intérieur de la structure une couche supplémentaire constituée essentiellement d'une composition barrière.

Lorsque le réservoir possède une structure multicouche, la structure multicouche de la plaque peut être différente de celle des parois du réservoir lui-même. Elle peut aussi être identique à celle-ci. On préfère souvent les systèmes d'obturation dans lesquels la structure de la plaque est identique à celle des parois du réservoir. Tout particulièrement préférés sont les systèmes dans lesquels, au sein de structures identiques, les compositions barrière sont elles-mêmes identiques et constituent des couches polymériques identiques.

En variante, la structure multicouche de la plaque peut aussi comprendre deux couches barrière distinctes. Un exemple préféré selon cette variante est celui des plaques comportant deux structures complètes identiques à celle des parois du réservoir, empilées l'une sur l'autre et résultant de la compression de deux structures identiques aux parois du réservoir.

Une autre variante consiste à réaliser au voisinage du bord de la plaque un bossage dans lequel les épaisseurs des couches sont réduites, en particulier celles des couches autres que la couche barrière. L'intérêt est ici de limiter encore le risque de perte par émission à l'endroit de la soudure de la plaque sur le réservoir.

Par couche externe de la plaque, on entend désigner une couche dont une des faces est adjacente à une autre couche de la plaque et dont l'autre face est en contact avec l'environnement extérieur à cette plaque.

Le système selon l'invention convient bien pour obturer une simple ouverture d'un réservoir. Il convient aussi pour obturer une ouverture surmontant un accessoire situé dans le réservoir.

Selon une forme particulière du système d'obturation selon l'invention qui est préférée, la plaque est solidaire d'au moins un accessoire situé du côté intérieur au réservoir. Par accessoire, on entend désigner tout organe en général par lequel transite du liquide ou du gaz, ou est en contact avec du liquide ou du gaz et qui remplit une fonction particulière propre au dispositif dont fait partie le réservoir, en ce compris une fonction de transport de liquide et/ou de gaz entre deux autres organes.

Des exemples de tels accessoires comprennent, non limitativement, les accessoires suivants :

• un récipient contenant une composition chimique ou physique quelconque, notamment un canister d'absorption de vapeurs;

- une jauge à liquide ou a gaz;
- une connexion électrique aboutissant à une jauge à liquide ou à gaz;
- une pompe à liquide ou à gaz;
- un clapet de sécurité assurant la fermeture contrôlée du réservoir dans certaines situations particulières;
- une capacité vidangeable pour recueillir du liquide;
- une connexion électrique d'alimentation du moteur d'une pompe à liquide ou à gaz;
- une canalisation de liquide aboutissant à un dispositif d'alimentation d'un dispositif quelconque, notamment à un moteur;
- un dispositif de séparation liquide-vapeur.

Une combinaison quelconque d'au moins deux accessoires peut être utilisée, éventuellement en présence de plusieurs exemplaires d'un même accessoire.
Selon cette forme de réalisation, l'accessoire est solidaire de la plaque, c'est-à-dire qu'il est lié à la plaque par un moyen mécanique. L'accessoire est fixé à la plaque par tout moyen mécanique compatible avec le type de réservoir, la nature du liquide et du gaz qui y est entreposé et l'usage habituel qui est fait du réservoir. La plaque peut fournir un moyen de préhension et de transport de l'accessoire. On peut par exemple utiliser une plaque sur laquelle on a fixé l'accessoire par un dispositif mécanique de fixation. De tels dispositifs sont, par exemple des vis, écrous, système d'enclipsage, .... On peut aussi utiliser une plaque et un accessoire qui ont été solidarisés dès leur fabrication, par exemple par moulage. On peut encore faire usage d'un moyen de solidarisation à caractère plus permanent tel que le collage ou le soudage. On préfère généralement les accessoires solidarisés à la plaque par soudage.
L'accessoire solidaire de la plaque se présente par rapport à celle-ci sur la face de plaque qui est à l'intérieur du réservoir, lorsque l'obturation est réalisée.
Des accessoires de type divers appartiennent à cette forme de réalisation. Comme exemples, on peut citer des clapets ROV ("Roll-Over-Valve") ou clapets de fermeture automatique en cas de retournement du réservoir, des clapets ORVR ("On board Refuelling Vapour Recovery") ou dispositif de récupération des vapeurs lors du remplissage du réservoir, des dispositifs OBD ("On Board Diagnostic") ou dispositifs de diagnostic embarqués, des séparateurs liquide-vapeur.
Certains de ces accessoires peuvent comporter au moins un conduit traversant la plaque par un orifice percé dans celle-ci. Il est dans ce cas souvent avantageux de munir l'orifice de sortie du conduit d'un joint d'étanchéité.
La plaque peut aussi avoir été mise en forme pour être adaptée au mieux à l'environnement de l'ouverture à obturer ainsi qu'à la forme et à l'encombrement de l'accessoire dont elle est solidaire.
Une plaque solidaire d'un séparateur liquide-vapeur comprenant un conduit d'évacuation des vapeurs qui traverse la plaque par un orifice a donné de bons résultats.

Un système d'obturation particulier consiste à utiliser un réservoir dont la paroi porte des ergots de fixation au voisinage de l'ouverture. Ceux-ci permettent de soutenir la paroi lors de l'opération de soudage, en cas de déformation flexible de cette paroi.
L'invention concerne aussi un procédé d'obturation d'une ouverture d'un réservoir en matière plastique par une plaque en matière plastique de structure multicouche dont la couche externe soudée sur la paroi du réservoir à l'endroit du pourtour de l'ouverture a une composition compatible avec celle de la matière plastique constituant la surface externe du réservoir, selon lequel on effile une zone périphérique de la plaque avant soudage de manière à adapter sa géométrie selon la relation suivante :

$$l/e \geq 5$$

dans laquelle $l$ représente la largeur de la zone effilée et $e$ l'épaisseur de la couche en contact avec la paroi du réservoir dans la zone effilée, exprimées dans les mêmes unités de longueur.
Dans ce procédé, les termes spécifiques communs tels que réservoir, ouverture, obturation, matière plastique, structure multicouche, plaque, souder, endroit du pourtour de l'ouverture, composition compatible ont exactement les mêmes significations que celles explicitées *supra* pour le système d'obturation.
La plaque utilisée dans ce procédé peut être d'origines diverses. Elle peut, par exemple avoir été fabriquée indépendamment du réservoir lui-même, à un moment différent ou non, au moyen d'un procédé propre qui n'est pas nécessairement identique à celui mis en oeuvre pour fabriquer le réservoir. Par exemple, la plaque peut être obtenue par coextrusion suivie éventuellement de moulage par compression. Elle peut aussi avoir été obtenue par moulage selon une des nombreuses techniques connues. De telles techniques sont, par exemple, le moulage par soufflage, par compression et par injection et le thermoformage.
Lorsque la plaque est fabriquée indépendamment du réservoir, on procède à la réalisation d'une ouverture dans le réservoir qui est légèrement plus petite en dimensions que celles de la plaque, puis on procède à l'obturation de l'ouverture par soudage de la plaque.
En variante, la plaque peut avoir été fabriquée simultanément au réservoir et découpée dans la matière plastique de structure multicouche utilisée pour fabriquer le réservoir. Cette façon de procéder est particulièrement avantageuse du point de vue de la synchronisation de la production de réservoirs équipés de leurs accessoires. Il est par exemple possible de découper la plaque directement dans une région de la paroi du réservoir, après réalisation de celui-ci ou d'une partie de celui-ci. Cette variante suppose aussi que la couche externe la plus intérieure de la structure multicouche du réservoir soit compatible avec sa couche la plus extérieure.

Une autre variante est de découper la plaque dans les rebuts de fabrication du réservoir, pour autant qu'ils possèdent la structure multicouche adéquate.

On peut encore découper la plaque dans une annexe au réservoir spécialement conçue à cette fin et produite simultanément à celui-ci.

Enfin, on peut également fabriquer des plaques comportant deux structures complètes identiques à celle des parois du réservoir, par compression de deux structures identiques aux parois du réservoir. Dans ce cas, on peut, par exemple, comprimer une partie particulière de la paraison servant à produire le réservoir. Il est tout particulièrement avantageux pour ce faire, d'effectuer la compression des deux structures identiques de la plaque à même le moule de production du réservoir.

La zone effilée périphérique de la plaque peut être réalisée par toute technique appropriée. Des techniques qui sont bien adaptées sont les techniques de mise en forme par thermoformage et par extrusion-compression.

L'opération de soudage de la plaque sur le réservoir peut se faire par toute technique généralement connue par elle-même. On peut, par exemple utiliser la technique de soudage au miroir ou encore la technique de soudage au laser. La technique de soudage au miroir est préférée. La technique de soudage de la plaque sur le réservoir peut être différente de celle de la zone périphérique effilée de cette plaque.

Selon l'invention, le soudage de la partie effilée de la plaque se fait par une technique de soudage par rayonnement laser ou par rayonnement infrarouge.

Selon un mode de réalisation préféré du procédé conforme à l'invention, on incorpore à la couche de matière plastique de la zone effilée en contact avec la surface externe du réservoir une composition opaque au rayonnement laser ou au rayonnement infrarouge.

Avantageusement, ce mode de réalisation fournit des réservoirs sur lesquels la soudure au rayonnement laser ou infrarouge de la zone périphérique effilée de la plaque est de meilleure qualité. Par composition opaque au rayonnement laser ou infrarouge, on entend une composition qui absorbe et/ou réfléchit une proportion importante de l'énergie du rayonnement laser ou infrarouge. Un exemple d'une telle composition ayant donné de bons résultats est une charge de noir de carbone. Cette composition est avantageusement répartie de manière homogène dans la matière polymérique de la couche directement en contact avec la paroi du réservoir.

Selon une forme particulière du procédé conforme à l'invention, on solidarise au moins un accessoire à la plaque, du côté intérieur au réservoir. Tout procédé de solidarisation compatible avec le réservoir, la nature du liquide et du gaz qu'il contient ainsi qu'avec ses conditions d'utilisation peut généralement convenir.

On préfère cependant utiliser un procédé de soudage pour réaliser cette solidarisation.

Ici encore, les termes solidarisation et côté intérieur au réservoir ont la même signification que déjà explicité supra dans le cas du système d'obturation.

Selon cette forme de réalisation particulière du procédé conforme à l'invention, une première variante consiste à souder au moins un accessoire à la plaque avant de procéder à l'obturation de l'ouverture du réservoir par soudage de la plaque solidaire de l'accessoire sur le pourtour de cette ouverture.

De cette manière, la plaque joue le rôle de support de l'accessoire et permet son introduction de manière aisée à l'intérieur du réservoir.

Une deuxième variante consiste au contraire à solidariser, dans une première étape, au moins un accessoire sur la paroi interne du réservoir adjacente à l'ouverture et, dans une deuxième étape subséquente, d'obturer le réservoir par soudage simultané de la plaque sur l'accessoire et sur le pourtour de l'ouverture.

Dans l'une ou l'autre des formes de réalisation du procédé que l'on met en oeuvre, un problème peut se poser lors de l'opération de soudage de la plaque sur la paroi du réservoir lorsque cette dernière, pour une raison quelconque subit une déformation flexible au voisinage de l'ouverture, par exemple sous l'influence de son propre poids ou par suite des forces exercées perpendiculairement à la surface du réservoir lors de la soudure. Pareille situation peut en effet se présenter lorsque le réservoir vient directement de fabrication et que la température de ses parois est encore relativement élevée. Une autre raison pourrait être que le diamètre de l'ouverture est relativement grand et que la matière plastique au voisinage du bord de l'ouverture n'est plus soutenue aussi efficacement que dans le cas de petites ouvertures.

L'invention concerne aussi un procédé d'obturation qui remédie à ces problèmes de déformation flexible de la paroi du réservoir en supportant la paroi du réservoir dans le voisinage de l'ouverture durant l'opération de soudage de la plaque au moyen d'ergots moulés sur cette paroi

Les ergots ont été moulés sur la paroi externe du réservoir au voisinage du pourtour de l'ouverture. La paroi du réservoir est soutenue à cet endroit au moyen de pinces qui viennent enserrer les ergots.

Des ergots semblables à ceux décrits ci-dessus peuvent aussi être utilisés lorsqu'on découpe la plaque dans la paroi du réservoir, de façon à éviter les déformations de celle-ci.

Les ergots peuvent encore être utilisés pour corriger, avant l'opération de soudage, un défaut de planéité qui surviendrait à la surface du réservoir.

Enfin, ils peuvent aussi concourir à faire correspondre parfaitement la forme de la surface extérieure du réservoir à celle de la plaque.

L'invention concerne aussi l'utilisation du procédé décrit ci-dessus pour obturer une ouverture d'un réservoir à carburant, en particulier pour véhicule automobile.

Par véhicule automobile, on désigne les véhi-

**9**                                  **EP 1 439 974 B1**               10

cules mus par un moteur thermique tels que les camions, voitures et motocyclettes.

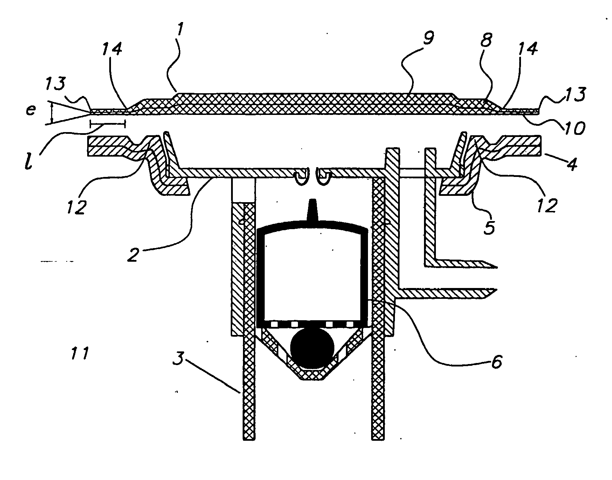

La figure qui suit est donnée dans le but d'illustrer l'invention, sans vouloir en restreindre sa portée.

La figure représente un réservoir (11) dont la paroi est constituée d'une structure multicouche comprenant une couche barrière en EVOH entourée de deux couches en PEHD. La couche barrière est solidarisée aux couches de PEHD via une mince couche intermédiaire de 80 μm d'adhésif en polyéthylène greffé par l'anhydride maléique de marque ADMER®L2100 de MITSUI. La structure multicouche de la paroi du réservoir (11) comporte une ouverture dans laquelle est encliquetée une pipette (2) sur le rebord (5) de la paroi (4) du réservoir (11). Un clapet ROV (3) de mise à l'air à flotteur (6), muni d'une jupe en polyacétal (3), a été fixé sur la pipette (2), également par encliquetage.

Une plaque (1) de structure multicouche comportant une couche barrière (9) en EVOH, une couche (8) en PEHD et une couche (10) en PEHD chargée de 0,2 % en poids de noir de carbone a été moulée par thermoformage, de façon à obtenir un profil effilé sur une zone périphérique (13), (14) de 10 mm de largeur (*l*) jusqu'à obtention d'une épaisseur (*e*) de 0,8 mm pour la couche de PEHD chargée de noir de carbone. Cette plaque (1) a été soudée sur la surface extérieure (12) du réservoir par soudage au miroir chauffant, la couche (10) chargée de noir de carbone étant placée en contact avec la paroi du réservoir (11). La zone périphérique effilée (13) (14) de la plaque (1) a ensuite été soudée par balayage à l'aide d'un rayon laser sur les parties extérieures du réservoir jouxtant la zone (12) soudée au miroir chauffant. Le laser employé a été un laser à diode de type FAP, YAG de longueur d'onde de 809 nm et puissance de 35 W, utilisé en mode pulsé.

**Revendications**

1. Réservoir en matière plastique comprenant un système d'obturation constitué d'une plaque en matière plastique soudée sur la paroi du réservoir à l'endroit du pourtour d'une ouverture dans le réservoir, la plaque étant constituée d'une structure multicouche comprenant une couche barrière interne et une couche externe soudée sur le réservoir ayant une composition compatible avec celle de la matière plastique constituant la surface externe du réservoir, **caractérisé en ce qu'**une zone périphérique de la plaque, dans la zone de soudure, a été effilée de manière à adapter sa géométrie selon la relation suivante:

$$l/e \geq 5$$

dans laquelle *l* représente la largeur de la zone effilée et *e* l'épaisseur de la couche en contact avec la paroi du réservoir dans la zone effilée, exprimées dans les mêmes unités de longueur.

2. Réservoir selon la revendication précédente, **caractérisé en ce que** le rapport *l/e* est au moins égal à 8.

3. Réservoir selon la revendication 1 ou 2, **caractérisé en ce que** le réservoir est constitué d'une structure multicouche.

4. Réservoir selon la revendication précédente, **caractérisé en ce que** le réservoir et la plaque sont constitués de la même structure multicouche.

5. Réservoir selon une quelconque des revendications précédentes, **caractérisé en outre en ce que** la plaque est solidaire d'au moins un accessoire situé du côté intérieur au réservoir.

6. Procédé d'obturation d'une ouverture d'un réservoir en matière plastique par une plaque en matière plastique de structure multicouche dont la couche externe soudée sur la paroi du réservoir à l'endroit du pourtour de l'ouverture a une composition compatible avec celle de la matière plastique constituant la surface externe du réservoir, **caractérisé en ce que** l'on effile une zone périphérique de la plaque avant soudage de manière à adapter sa géométrie selon la relation suivante:

$$l/e \geq 5$$

dans laquelle *l* représente la largeur de la zone effilée et *e* l'épaisseur de la couche en contact avec la paroi du réservoir dans la zone effilée, exprimées dans les mêmes unités de longueur,

7. Procédé selon la revendication précédente, **caractérisé en ce que** la soudure de la partie effilée se fait selon la technique de soudage par rayonnement laser ou par rayonnement infrarouge.

8. Procédé selon la revendication précédente, **caractérisé en ce qu'**on incorpore à la couche de matière plastique de la zone effilée en contact avec la surface externe du réservoir une composition opaque au rayonnement laser ou au rayonnement infrarouge.

9. Procédé selon une quelconque des revendications 6 à 8, **caractérisé en ce qu'**on réalise l'effilage de la zone périphérique de la plaque selon un procédé choisi parmi le thermoformage ou l'extrusion-compression.

10. Utilisation du procédé selon une quelconque des revendications 6 à 9 pour obturer une ouverture d'un réservoir à carburant destiné à un véhicule automobile.

## Claims

1. Plastic tank comprising a closing system formed from a plastic sheet welded to the wall of the tank around the perimeter of an opening in said tank, the sheet being formed from a multilayer structure that includes an inner barrier layer and an outer layer welded to the tank and having a composition compatible with that of the plastic forming the outer surface of the tank, **characterized in that** a peripheral region of the sheet, in the weld region, has been slimmed down so as to adapt its geometry according to the following relationship:

$$l/e \geq 5$$

   in which *l* represents the width of the slimmed-down region and *e*, the thickness of the layer in contact with the wall of the tank in the slimmed-down region, both expressed in the same length units.

2. Tank according to the preceding claim, **characterized in that** the *l*/*e* ratio is at least 8.

3. Tank according to Claim 1 or 2, **characterized in that** the tank is formed from a multilayer structure.

4. Tank according to the preceding claim, **characterized in that** the tank and the sheet are formed from the same multilayer structure.

5. Tank according to any one of the preceding claims, furthermore **characterized in that** the sheet is fastened to at least one accessory located on the inside of the tank.

6. Method of closing off an opening in a plastic tank by means of a plastic sheet of multilayer structure, the outer layer of which, welded to the wall of the tank around the perimeter of the opening, has a composition compatible with that of the plastic forming the outer surface of the tank, **characterized in that** a peripheral region of the sheet is slimmed down, before welding, so as to adapt its geometry according to the following relationship:

$$l/e \geq 5$$

   in which I represents the width of the slimmed-down region and *e*, the thickness of the layer in contact with the wall of the tank in the slimmed-down region, both expressed in the same length units.

7. Method according to the preceding claim, **characterized in that** the slimmed-down part is welded by a laser radiation or infrared radiation welding technique.

8. Method according to the preceding claim, **characterized in that** a composition opaque to the laser radiation or to the infrared radiation is incorporated into the plastic layer of the slimmed-down region in contact with the outer surface of the tank.

9. Method according any one of Claims 6 to 8, **characterized in that** the peripheral region of the sheet is slimmed down using a process chosen from thermoforming and extrusion-compression moulding.

10. Use of the method according to any one of Claims 6 to 9 to close off an opening in a fuel tank intended for a motor vehicle.

## Patentansprüche

1. Behälter aus Kunststoff mit einem Verschlußsystem, das durch eine Platte aus Kunststoffmaterial gebildet ist, die an einer Stelle am Umfang einer Öffnung in dem Behälter an die Wand des Behälters geschweißt ist, wobei die Platte eine mehrlagigen Aufbau hat, der eine innere Sperrschicht und eine äußere Sperrschicht aufweist, die an den Behälter geschweißt sind und eine Zusammensetzung haben, die mit jener des Kunststoffmaterials, welches die Außenfläche des Behälters bildet, kompatibel ist, **dadurch gekennzeichnet, daß** eine Umfangszone der Platte in der Schweißzone derart geschwächt ist, daß sie eine Geometrie gemäß der folgenden Beziehung hat:

$$l/e \geq 5$$

   in welcher **l** die Breite der geschwächten Zone und **e** die Dicke der Schicht in Kontakt mit der Wand des Behälters in der geschwächten Zone sind, ausgedrückt durch die gleichen Längeneinheiten.

2. Behälter nach dem vorhergehenden Anspruch, **dadurch gekennzeichnet, daß** das Verhältnis **l**/**e** zumindest gleich 8 beträgt.

3. Behälter nach Anspruch 1 oder 2, **dadurch gekennzeichnet, daß** der Behälter einen mehrlagigen Aufbau hat.

**4.** Behälter nach dem vorhergehenden Anspruch, **dadurch gekennzeichnet, daß** der Behälter und die Platte den gleichen mehrlagigen Aufbau haben.

**5.** Behälter nach einem der vorhergehenden Ansprüche, **dadurch gekennzeichnet, daß** die Platte mit zumindest einem Accessoire fest verbunden ist, das an der Innenseite des Behälters vorgesehen ist.

**6.** Verfahren zum Verschließen einer Öffnung eines Behälters aus Kunststoff durch eine Platte aus Kunststoffmaterial mit mehrlagigem Aufbau, dessen Außenschicht, die an einer Stelle des Umfanges der Öffnung an die Wand des Behälters geschweißt ist, eine Zusammensetzung hat, die mit jener des Kunststoffmaterials, welches die Außenfläche des Behälters bildet, kompatibel ist, **dadurch gekennzeichnet, daß** eine Umfangszone der Platte vor dem Schweißen des Materials geschwächt wird, um ihre Geometrie nach der folgenden Beziehung zu gestalten:

$$l/e \geq 5$$

in welcher *l* die Breite der geschwächten Zone und *e* die Dicke der Schicht in Kontakt mit der Wand des Behälters in der geschwächten Zone sind, ausgedrückt durch die gleichen Längeneinheiten.

**7.** Verfahren nach dem vorhergehenden Anspruch, **dadurch gekennzeichnet, daß** das Anschweißen der geschwächten Zone durch Laserstrahl- oder Infrarotstrahlschweißung erfolgt.

**8.** Verfahren nach dem vorhergehenden Anspruch, **dadurch gekennzeichnet, daß** in die Schicht aus Kunststoffmaterial in der geschwächten Zone in Kontakt mit der Außenfläche des Behälters eine für Laserstrahl- oder Infrarotstrahlung undurchlässige Zusammensetzung eingebaut wird.

**9.** Verfahren nach einem der Ansprüche 6 bis 8, **dadurch gekennzeichnet, daß** das Schwächen der Umfangszone der Platte nach einem Verfahren erfolgt, das aus der Gruppe Thermoformung oder Extrusion-Kompression gewählt ist.

**10.** Verwendung des Verfahrens nach einem der Ansprüche 6 bis 9 zum Verschließen einer Öffnung eines Kraftstoffbehälters, der für ein Automobilfahrzeug bestimmt ist.

## RÉFÉRENCES CITÉES DANS LA DESCRIPTION

**Documents brevets cités dans la description**

- WO 0121428 A